Europäisches Patentamt

**European Patent Office**

Office européen des brevets

(19)

(11) Publication number: **0 237 331**
**A2**

(12) # EUROPEAN PATENT APPLICATION

(21) Application number: **87302064.8**

(22) Date of filing: **11.03.87**

(51) Int. Cl.³: **G 02 F 1/315**
**G 02 F 1/137**

(30) Priority: **12.03.86 GB 8606153**

(43) Date of publication of application:
**16.09.87 Bulletin 87/38**

(84) Designated Contracting States:
**DE FR**

(71) Applicant: **The General Electric Company, p.l.c.**
**1 Stanhope Gate**
**London W1A 1EH(GB)**

(72) Inventor: **Skinner, Jeffrey David**
**35 Gondar Gardens**
**London NW6 1EP(GB)**

(74) Representative: **MacKenzie, Ian Alastair Robert**
**The General Electric Company, p.l.c. Central Patent**
**Department Wembley Office Hirst Research Center East**
**Lane**
**Wembley Middlesex HA9 7PP(GB)**

(54) **Reduced crosstalk optical switch.**

(57) An optical switch comprises a pair of glass prisms (10, 11) of refractive index $n_g$ and base angle $\theta$ one on either side of a liquid crystal interface (12) of positive dielectric anisotropy and having an extraordinary refraction index $n_e$ and an ordinary refraction index $n_o$. To reduce crosstalk the refractive index $n_g$ is so chosen that

$$\frac{1}{n_g^2} = \frac{\sin^2\theta}{n_e^2} + \frac{\cos^2\theta}{n_o^2}$$

*Fig. 1.*

OFF

HR/2914/EPC

# REDUCED CROSSTALK OPTICAL SWITCH

The present invention concerns optical switches utilising a liquid crystal interface. Such switches are well known.

However a major problem which has hindered the wider use of liquid crystal switches is the problem of crosstalk, and the present invention has for one object to provide an optical switch with a low crosstalk factor.

Accordingly from one aspect the present invention consists in an optical switch comprising two glass prisms located on either side of a liquid crystal interface, wherein the liquid crystal is chosen to have a positive dielectric anisotropy with an extra-ordinary refractive index $n_e$ and an ordinary refractive index $n_o$, and wherein the refractive index of the glass prisms, $n_g$, is chosen so that $n_g = n_e^1$ where

$$\frac{1}{n_e^{1^2}} = \frac{\sin^2\theta}{n_e^2} + \frac{\cos^2\theta}{n_o^2}$$

and wherein $\theta$ is the base angle of the prisms.

According to a feature of the invention, each prism may carry a transparent electrode which is approximately $100 - 150$ Å thick and each electrode may be covered with a polymer having the same refractive index as the glass prisms.

In accordance with a second aspect of the invention there is provided an optical switching array incorporating a plurality of optical switches as set out hereinbefore, and including means for applying a switching voltage in the order of 100 volts to the electrodes of each of the switches.

In order that the present invention may be more readily understood, an embodiment thereof will now be described by way of example and with reference to the accompanying drawings, in which:

Figure 1 shows an optical switch incorporating a liquid crystal interface in the OFF condition,

Figure 2 shows the same switch in the ON condition, and

Figure 3 is an enlargement of part of Figure 2.

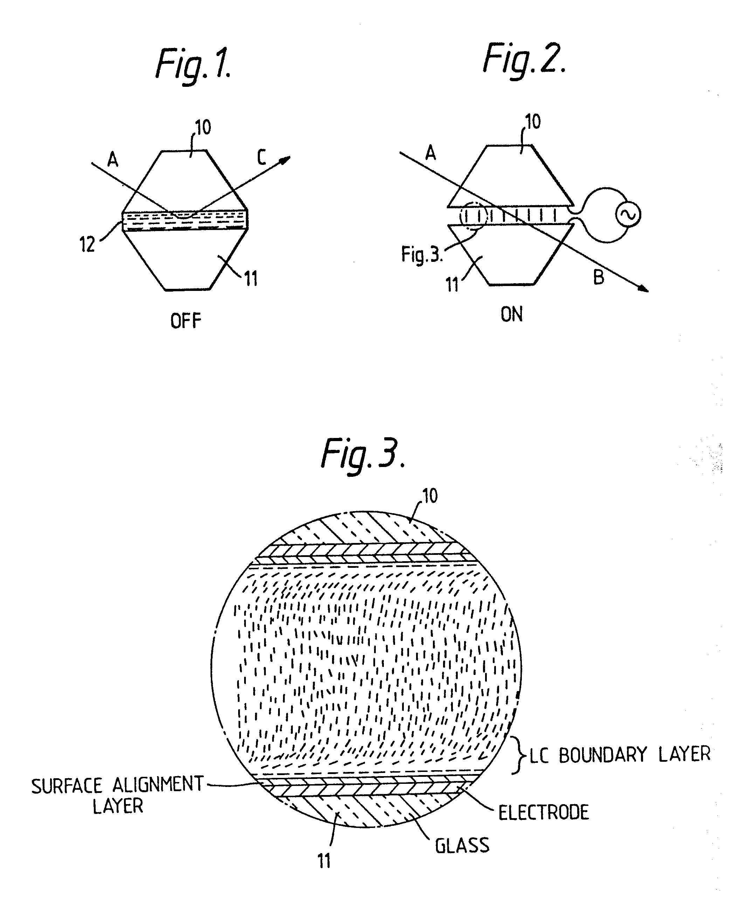

Referring now to the drawings Figure 1 shows the basic design of an optical switch. This comprises two glass prisms 10,11 in the shape of prism trapeziums whose faces are polished to minor flatness. One face of each prism is coated with a thin layer of a transparent conducting material such as Indium Tin Oxide which acts as an electrode. This layer is covered by another thin layer of a polymer. The polymer layer, in known optical switches of this type, is mechanically rubbed in the X direction using a cloth. The rubbing operation introduces microscopic scratches in the polymer whose purpose will be explained later.

The two prisms 10, 11 are placed together with the double coated faces facing each other and are held spaced apart by a seal 12 which is about 9 microns thick. The cavity between the faces is filled with a liquid crystal.

Such a switch is capable of switching a ray of light incident at A to either B or C.

The input ray of light is linearly polarised in the x,2 plane and may                originate from an optical fibre attached to the side of the prism 10 by means of a focussing lens, or from a gas laser. In any case the incident ray of light A always strikes the face of the prism 10 normally.

In the present embodiment the molecules of the liquid crystal passes positive dielectric anisotropy. Furthermore the refractive index, $n_g$, of the glass prisms 10, 11 is chosen to be very close to the extra-ordinary index, $n_e$, of the liquid crystal. Thus when an electric potential is applied to the transparent electrodes of the switch the liquid crystal molecules align with the field so generated. This is the condition shown in Figure 2. The incoming ray of light A "sees" the higher refractive index, $n_g$, of the crystal which is very close to that, $n_e$, of the glass, and in the absence of any optical discontinuity passes out of the switch in direction B.

When the electrical potential is removed the liquid crystal molecules align parallel to the adjacent parallel surfaces of the glass prisms 10,11 with their long axes parallel to the microscopic grooves in the polymer layer. The ray of light A now sees the lower of the two liquid crystal refractive indices, $n_o$, and if $\theta$, the base angle of prism 10 is chosen that $Sin\theta$   $n_o/n_g$, then the light ray undergoes total internal reflection and passes out along C.

Previously all known liquid crystal switches have suffered from a major "crosstalk" problem when in the "ON" state. The crosstalk is caused by spurious reflections in the region of the liquid crystal interface. These reflections are due to the false assumption that the light sees no optical discontinuation when passing through the switch in its "ON" state.

As previously mentioned the present invention is concerned with reducing crosstalk to a minimum and it has been discovered that the use of positive dielectric liquid crystals in the presently described embodiment is a factor in reducing crosstalk as they have greater optical anisotropy than negative crystals. They are also more tightly bound at the cell boundaries.

In the present embodiment the possibility of optical discontinuities in the ON state is also reduced by appreciating that the incident light in the ON state does not actually see $n_e$ the extraordinary refractive index of the liquid crystal but a slightly lower index $n_e^1$ given by the equation:

$$\frac{1}{n_e^{1^2}} = \frac{\sin^2\theta}{n_e^2} + \frac{\cos^2\theta}{n_o^2} \quad \ldots\ldots\ldots\ldots(1)$$

Thus in the present embodiment the refractive index of prisms 10, 11 is selected to satisfy this equation. Furthermore the polymer layer is chosen so that it has a refractive index similar to that of the glass prisms 10, 11. In the present embodiment the chosen material is polyvinyl carazole. The thickness of this layer is defined such that it is substantially the same as the minimum depth of groove required to align the liquid crystal molecules in the OFF state.

The thickness of the elctrode layer is chosen, in the present embodiment, to be between 100 and 150 Å, Furthermore it has been discovered that when known optical switches are in the ON state there is a region of unswitched liquid crystal very close to the surfaces of the cell which finds a lower potential state by aligning with the microscopic grooves rather than with the applied electric field. In order to reduce effect the liquid crystal layer in the present embodiment is arranged to be switched at 100 volts, substantially in excess of the normal 12 volts. A range of 50 to 125 volts cam be used with higher voltages giving still further improvement.

In the embodiment of the switch being described, the glass for the prisms had a refractive index ($n_g$) 1.693. The liquid crystal was KIS (BDH) for which $n_e$ = 1.73 and $n_o$ = 1.53. From the equation 1 the angle $\theta$ at which the refractive indices are matched is 67.

The optical switch which has just been described has in operation extremely low crosstalk and can thus be used in multi-switch structures to handle a plurality of input signals and to switch them between a plurality of outputs.

## CLAIMS

0237331

1. An optical switch comprising a pair of transparent prisms (10, 11) of base angle $\theta$ and refractive index $n_g$ located one on either side of a liquid crystal interface (12) having positive dielectric anisotropy, and an electrode on each of the prisms whereby the liquid crystal interface (12) can be switched between the state of having its ordinary refractive index $n_o$ and its extraordinary refractive index $n_e$ and characterised in that the materials aare so chosen that

$$\frac{1}{n_g^2} = \frac{\sin^2\theta}{n_e^2} + \frac{\cos^2\theta}{n_o^2}$$

2. An optical switch as claimed in Claim 1, and further characterised in that the electrodes are between 100 and 150 $\overset{o}{A}$ thick.

3. An optical switch as claimed in Claim 2, and further characterised in that each electrode is covered with a polymer having the same refractive index as the prisms.

4. An optical switch as claimed in Claim 3, and characterised in that it includes means for applying a switching voltage of between 50 and 125 volts to said electrodes.

*///*

## Fig.1.

OFF

## Fig.2.

ON

## Fig.3.

SURFACE ALIGNMENT LAYER

LC BOUNDARY LAYER

ELECTRODE

GLASS